Europäisches Patentamt

European Patent Office

Office européen des brevets

(19)

(11) **EP 0 464 117 B1**

(12) **FASCICULE DE BREVET EUROPEEN**

(45) Date de publication et mention
de la délivrance du brevet:
**03.01.1996 Bulletin 1996/01**

(51) Int Cl.6: **H01M 4/48**, H01M 4/58,
H01M 10/36

(21) Numéro de dépôt: **90905555.0**

(22) Date de dépôt: **20.03.1990**

(86) Numéro de dépôt international:
**PCT/FR90/00187**

(87) Numéro de publication internationale:
**WO 90/11623 (04.10.1990 Gazette 1990/23)**

(54) **MATERIAU D'ELECTRODE A BASE D'OXYDE DE VANADIUM CONTENANT DU LITHIUM, PROCEDE DE FABRICATION ET UTILISATION DANS UN GENERATEUR ELECTROCHIMIQUE**

ELEKTRODENMATERIAL AUF DER BASIS VON LITHIUM ENTHALTENDEM VANADIUMOXYD, VERFAHREN ZUR HERSTELLUNG UND ANWENDUNG IN EINEM ELEKTROCHEMISCHEN GENERATOR

VANADIUM OXIDE-BASED ELECTRODE MATERIAL CONTAINING LITHIUM, MANUFACTURING PROCESS AND USE IN AN ELECTROCHEMICAL GENERATOR

(84) Etats contractants désignés:
**DE GB IT**

(30) Priorité: **21.03.1989 FR 8903682**

(43) Date de publication de la demande:
**08.01.1992 Bulletin 1992/02**

(73) Titulaire: **CENTRE NATIONAL DE
LA RECHERCHE SCIENTIFIQUE (CNRS)
F-75700 Paris Cedex 07 (FR)**

(72) Inventeurs:
• **DELMAS, Claude
F-33400 Talence (FR)**
• **LEVASSEUR, Alain
F-33170 Gradignan (FR)**
• **MENETRIER, Michel,
Résidence Le Ponant, Apt C-351
F-33000 Bordeaux (FR)**
• **BRETHES, Sabine
F-33400 Talence (FR)**

(74) Mandataire: **Des Termes, Monique et al
F-75008 Paris (FR)**

(56) Documents cités:
FR-A- 2 527 842          FR-A- 2 605 458
FR-A- 2 615 657

• **Electrochimica Acta, Volume 28, No. 1, Janvier 1983, Pergamon Press Ltd, (Oxford, GB), N. KUMAGAI et al.: "Structural Changes of Nb205 and V205 as Rechargeable Cathodes for Lithium Battery", pages 17-22**
• **Proceedings of the Elecrochemical Society, Volume 88-6, 1988, (Pennington, GB), M. SUGAWARA et al.: "Electrochemical Behavior of Vanadium (V) Oxide in Propylene Carbonate-LiC104", pages 503-510**

• **Journal of Power Sources, Volume 7, No. 2, Janvier 1982, Elsevier Sequoia S.A., (NL), M. PASQUALI et al.: "(Mo0.3V0.7) 205 as a Solid Solution Cathode for Li Cells, Part II. Structural Characteristics and Secondary Cells", pages 145-152**
• **CHEMICAL ABSTRACTS, Volume 111, No. 14, 2 October 1989, (Columbus, Ohio, US), voir page 183, abstract 118219s**
• **Journal of Power Sources, Volume 24, No. 2, September 1988, Elsevier Sequoia, (NL), A. TRANCHANT et al.: "A Comparitive Electrochemical Study of MoO3, V2O5 and MoV2O8 as Rechargeble Cathodes in Lithium Cells", pages 85-93**
• **Electrochimica Acta, Volume 33, No. 7, July 1988, Pergamon Press plc., (Oxford, GB) S. HUB et al.: "X-Ray Investigations on Electroformed LixV2O5 Bronzes", pages 997-1002**
• **Journal of Power Sources, Volume 16, No. 3, November 1985, Elsevier Sequoia, (NL), J.-P. PEREIRA-RAMOS et al.:"Sulfone-Based Electrolytes for Lithium Intercalation Batteries", pages 193-204**
• **Journal of Power Sources, Volume 20, 1987, Elsevier Sequoia, (NL), K. WIESENER et al.: "Vanadium Oxides in Electrodes for Rechargeable Lithium Cells", pages 157-164**
• **Journal of Power Sources, Volume 20, 1987, Elsevier Sequoia, (NL), J.-P. PEREIRA-RAMOS et al.: "Investigation of Lithium Intercalation Materials With Organic Solvents and Molten Salts as Electrolytes at Temperature Between 60 and 175 C, pages 221-230**
• **Journal of the Electrochemical Society, Volume 132, No. 2, February 1985, (Manchester, New Hampshire, US), G. PISTOIA et al.: "Li/Li1+xV3O8 Secondary Batteries", voir pages 281-284**

Remarques:
Le dossier contient des informations techniques présentées postérieurement au dépôt de la demande et ne figurant pas dans le présent fascicule.

## Description

La présente invention a pour objet un procédé de préparation d'un matériau d'électrode pour générateur électrochimique au lithium et le nouveau matériau d'électrode obtenu par ce procédé.

De façon plus précise, elle concerne un nouveau matériau d'électrode positive à base d'oxyde de vanadium, éventuellement substitué par un autre élément tel que le niobium ou le molybdène, qui contient de plus du lithium.

Depuis quelques années, on a développé des générateurs électrochimiques au lithium en raison de leur très forte énergie massique potentielle. Ces générateurs électrochimiques comprennent une électrode positive constituée par un composé d'intercalation du lithium, un électrolyte liquide ou solide, et une électrode négative constituée par du lithium, un alliage de lithium ou un composé d'intercalation à bas potentiel par rapport au lithium.

Parmi les systèmes réversibles connus actuellement, l'intercalation dans $V_2O_5$ a été largement étudiée et on sait que la courbe de première décharge de ce matériau présente plusieurs paliers situés respectivement aux environs de 3,4, 3,2 et 2,4 volts par rapport au lithium.

Le principe de fonctionnement de tous ces systèmes résulte de la conservation, lors de l'intercalation du lithium, du squelette structural du matériau hôte servant à l'intercalation du lithium. Le réseau de liaisons fortes de cette structure d'accueil étant conservé, le système peut donc être désintercalé, d'où la réversibilité du générateur.

De nombreux auteurs ont étudié les performances des électrodes positives en $V_2O_5$ dans les batteries rechargeables au lithium. Ces études ont fait l'objet des publications suivantes de Wiesener et al dans Journal of Power Sources, 20, 1987, p. 157-164 ; de Tranchant et al dans Journal of Power Sources, 24, 1988, p. 85-93, et de Pereira-Ramos et al dans Journal of Power Sources, 20, 1987, p. 221-230.

Dans ces publications, il est indiqué que les batteries utilisant de telles électrodes positives sont cyclables lorsque la décharge est limitée à un potentiel tel que l'on inclut, lors de la décharge, moins de 2,35 atomes de lithium par molécule de $V_2O_5$. De ce fait, la capacité massique de générateurs au lithium utilisant des électrodes de ce type est limitée.

D'autres auteurs ont aussi étudié le comportement d'électrodes en $V_2O_5$ lorsqu'on effectue la décharge à des potentiels inférieurs comme il est décrit par N. Kumagai et al dans Electrochimica Acta, vol. 28, n° 1, 1983, p. 17-22, par M. Sugawara et al dans Proceedings of the Electrochemical Society, vol. 88-6, 1988, pages 503-510 et par M. Pasquali et al dans Journal of Power Sources, vol. 7, n° 2, 1982, p. 145-152.

Dans les conditions de décharge données par ces auteurs, on inclut toujours moins de 2,5 atomes de Li et l'on n'obtient pas de changement irréversible de structure conduisant à une amélioration des propriétés de l'électrode.

La présente invention a précisément pour objet un procédé de préparation d'un matériau d'électrode pour générateur électrochimique de ce type qui permet d'obtenir un matériau d'électrode ayant une énergie massique supérieure à celle de $V_2O_5$, une très bonne réversibilité, une cinétique d'intercalation ou de désintercalation rapide, un très large domaine d'utilisation car le matériau est insensible aux surcharges ou aux surdécharges du générateur, et un coût de mise en oeuvre réduit pour l'obtention du matériau.

Selon l'invention, le procédé de préparation d'un matériau d'électrode de générateur électrochimique répondant à la formule :

$$Li_x M_z V_{2-z} O_{5-t}$$

dans laquelle M représente Mo et/ou Nb, et x, z et t sont tels que

$$0 < x \leq 3,2$$
$$0 \leq z < 1$$
$$0 \leq t < 0,5$$

consiste à soumettre un matériau de formule $M_z V_{2-z} O_{5-t}$ dans laquelle z et t sont tels que définis ci-dessus, à une intercalation de lithium par décharge d'une cellule électrochimique comportant une électrode positive constituée par le matériau $M_z V_{2-z} O_{5-t}$, une électrode négative à base de lithium et un électrolyte conducteur par ions lithium, en effectuant cette décharge jusqu'à une tension inférieure à 1,9 volt par rapport à l'électrode de lithium, avec une densité de courant inférieure à 1mA/cm², dans des conditions telles qu'on intercale au moins 2,5 atomes de lithium par mole de $M_z V_{2-z} O_{5-t}$.

De préférence, la tension minimale de décharge est comprise entre 1 et 1,9 volt par rapport à l'électrode de lithium.

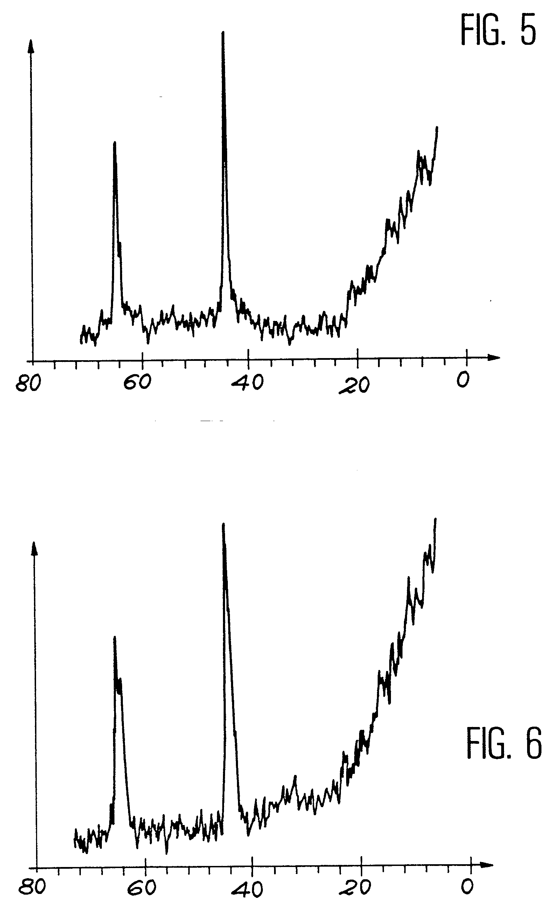

Le matériau obtenu par ce procédé présente un spectre de rayons X tel que celui représenté sur les figures 5 et 6, comprenant deux raies principales à un écart angulaire $2\theta$ de 64 et 44° (pour la longueur d'onde $K\alpha_1$ du cuivre), qui correspondent respectivement à des distances interréticulaires d'environ 2,0 Å et 1,45 Å, dans le cas où z=t=0, ces raies étant pratiquement inchangées après charge et décharge du matériau d'électrode.

Dans ce matériau M représente un ou plusieurs éléments susceptibles de se substituer au vanadium dans $V_2O_5$ utilisé comme produit de départ avant intercalation de lithium. L'enchaînement structural caractéristique de $V_2O_5$ est conservé dans la phase substituée. Une telle substitution a été obtenue dans le cas du molybdène par L. KIHLBORG (Acta Chemica Scandinavica, 21, 2495 (1967)). La phase de composition $(Mo_{0,3}V_{0,7})_2O_5$ a été obtenue. Cet auteur note l'analogie structurale avec la variété $R-Nb_2O_5$, ce qui laisse supposer l'existence de solutions solides avec le niobium.

Dans ce matériau, on peut aussi avoir un déficit en oxygène. En effet, l'oxyde de vanadium $V_2O_5$ présente

à température élevée le phénomène bien connu du rochage qui se traduit par une légère perte d'oxygène. Aussi, tout matériau déficitaire en oxygène conservant l'enchaînement structural de $V_2O_5$ est concerné par cette invention.

Le matériau d'électrode de l'invention a une structure différente de celle de $V_2O_{5-t}$ ou de $M_zV_{2-z}O_{5-t}$. Cette structure peut être obtenue par l'intercalation dans du $M_zV_{2-z}O_{5-t}$ d'au moins 2,5 atomes de lithium, par exemple d'environ 3 atomes de lithium, par voie chimique ou par voie électrochimique. Avec ce taux d'intercalation, on provoque une transformation irréversible du matériau de départ $M_zV_{2-z}O_{5-t}$ et on obtient une structure différente que l'on peut identifier aux rayons X et qui reste stable lors des cyclages électrochimiques ultérieurs du matériau dans un générateur électrochimique.

Ce nouveau matériau qui peut être formé à un bas potentiel, peut ensuite être intercalé ou désintercalé électrochimiquement dans toute la gamme de potentiels permise par les électrolytes utilisés dans les batteries au lithium. La nouvelle structure qui s'est édifiée, est ainsi conservée au cours des cyclages et le nouveau matériau présente de très bonnes caractéristiques électrochimiques.

Ce matériau peut aussi être utilisé dans des systèmes dérivés de générateurs électrochimiques fonctionnant par réaction redox, par exemple dans des systèmes électrochromiques.

Selon l'invention, on peut aussi préparer ce matériau d'électrode de formule $Li_xM_zV_{2-z}O_{5-t}$ dans laquelle x, z et t sont tels que définis ci-dessus, par voie chimique.

Dans ce cas, on met en contact une poudre d'un matériau de formule $M_zV_{2-z}O_{5-t}$ dans laquelle z et t sont tels que définis ci-dessus, avec un composé organolithien en solution dans un solvant organique, sous agitation et pendant une durée telle que l'on insère dans $M_zV_{2-z}O_{5-t}$ au moins 2,5 atomes de lithium par mole de $M_zV_{2-z}O_{5-t}$, de préférence 2,8 à 3,2, par exemple 3 atomes de lithium par mole de $M_zV_{2-z}O_{5-t}$.

Le composé organolithien peut être un alkyllithium, par exemple du butyllithium, et le solvant organique peut être de l'hexane. La durée nécessaire pour obtenir l'intercalation d'environ 3 atomes de lithium est généralement élevée, et peut varier par exemple de 1 à 10 jours.

Lorsqu'on prépare le matériau par voie électrochimique, on part également de l'oxyde $M_zV_{2-z}O_{5-t}$ et l'on soumet cet oxyde à une intercalation électrochimique de lithium par décharge d'une cellule électrochimique comprenant une électrode positive constituée par cet oxyde, une électrode négative à base de lithium et un électrolyte conducteur par ions lithium, en effectuant cette décharge jusqu'à une tension inférieure à 1,9 volt par rapport à l'électrode de lithium, par exemple à une tension minimale comprise entre 1 et 1,9 volt par rapport à l'électrode de lithium, dans des conditions telles qu'on intercale au moins 2,5 atomes de lithium par mole de $M_zV_{2-z}O_{5-t}$.

La réaction électrochimique conduisant au nouveau matériau objet de l'invention commence à se produire aux environs de 1,9V. Cette valeur peut toutefois être modulée par les conditions expérimentales (densité de courant, nature de l'électrolyte, texture de l'électrode). La valeur minimale de la tension est fonction de la nature de l'électrolyte utilisé (1V pour $LiClO_4$ dans le carbonate de propylène pur ou contenant du DME) et également des conditions expérimentales.

Il est souhaitable de ne pas provoquer de réaction de décomposition de l'électrolyte à bas potentiel, qui pourrait nuire au bon fonctionnement du système sans que le matériau d'électrode soit altéré. Cette valeur minimale de la tension pourrait être abaissée dans le cas de l'utilisation d'électrolytes plus stables à bas potentiel (polymères ou solides par exemple).

Pour obtenir cette intercalation d'au moins 2,5 atomes de lithium, il est important que la réalisation du générateur (intimité du contact matériau actif - conducteur électronique) d'une part, les conditions de décharge (densité de courant) d'autre part, conduisent à un système de faible polarisation permettant l'insertion d'au moins 2,5 atomes de lithium lors de la décharge jusqu'à une tension inférieure à 1,9 volt.

La façon de réaliser cette première décharge permet d'obtenir généralement l'intercalation de 2,5 à 3,2 atomes de lithium, et de modifier la structure du matériau de départ $M_zV_{2-z}O_{5-t}$ de façon irréversible, et d'obtenir ainsi le matériau caractérisé par le spectre de diffraction de rayons X mentionné ci-dessus et représenté sur la figure 5 annexée, sans supprimer la possibilité de cyclage électrochimique de ce matériau dans une gamme de potentiels importante par rapport à ce que l'on pouvait faire avec les générateurs de l'art antérieur.

Dans les documents de Kumagai et al, de Sugawara et al et de Pasquali et al mentionnés ci-dessus, on n'a obtenu ni cette modification de structure cristalline, ni cette intercalation d'au moins 2,5 atomes de lithium.

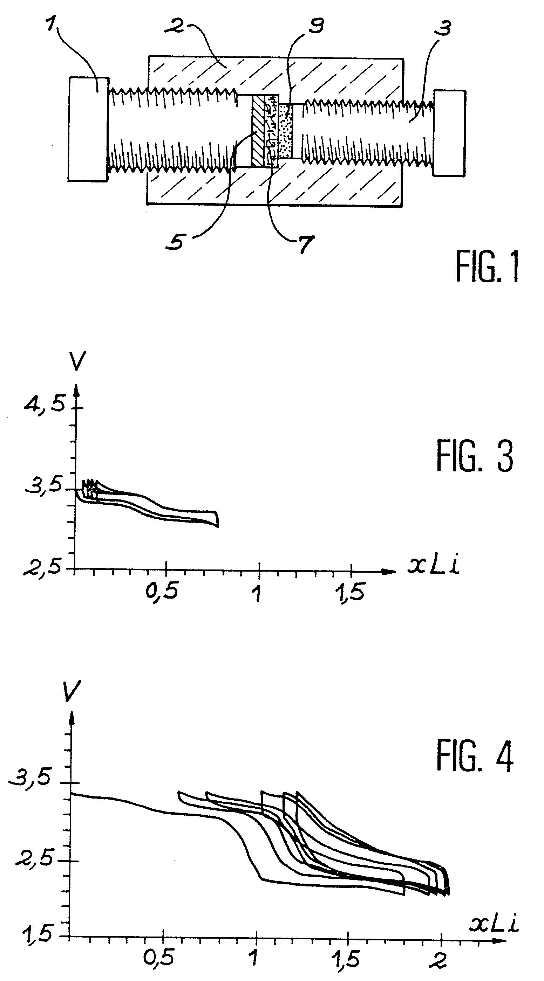

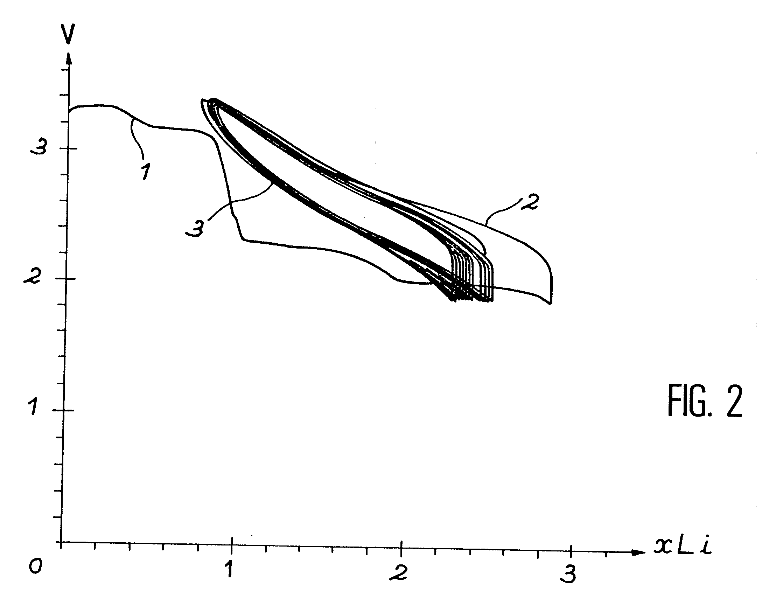

En effet, la figure 1 de Electrochimica Acta montre qu'il existe encore des plateaux lors de la deuxième décharge, et la figure 6 qui est un spectre de diffraction de rayons X du matériau indique que certaines raies réapparaissent lors de la recharge, c'est-à-dire que la structure du matériau n'est pas modifiée irréversiblement en la structure cristalline stable de l'invention.

La figure 1 de Proceedings of the Electrochemical Society montre que l'on n'a pas inclus 2,5 atomes de lithium lors de la décharge ; aussi le matériau de l'invention n'a pas pu se former. Par ailleurs, le matériau ne présente pas la structure cristalline de l'invention car il est devenu amorphe.

Dans Journal of Power Sources, 7, 1982, n° 2, p. 145-152, on intercale au plus deux atomes de lithium dans $(Mo_{0,3}V_{0,7})_2O_5$ et cela ne provoque pas de réorganisation structurale significative.

Ainsi, aucun de ces auteurs n'a pu obtenir le matériau d'électrode de l'invention qui présente des propriétés améliorées comme on le verra ci-après.

L'invention a encore pour objet un générateur électrochimique rechargeable comportant une électrode positive à base d'oxyde de vanadium, une électrode négative à base de lithium et un électrolyte conducteur par ions lithium, qui se caractérise en ce que l'oxyde de vanadium de l'électrode positive répond à la formule :

$$Li_xM_zV_{2-z}O_{5-t}$$

dans laquelle M représente Mo et/ou Nb, et x, z et t sont tels que

$$0<x\leq3,2$$
$$0\leq z<1$$
$$0\leq t<0,5$$

en ce qu'il est obtenu par le procédé décrit ci-dessus, et présente un spectre de diffraction de rayons X tel que celui représenté sur les figures 5 et 6, dans le cas particulier de z=t=0, comprenant deux raies à un écart angulaire $2\theta$ de 64 et 44° pour la longueur d'onde $K\alpha_1$ du cuivre, qui correspondent respectivement à des distances interréticulaires d'environ 2,0 Å et 1,45 Å, ces raies étant pratiquement inchangées après charge et décharge de l'électrode.

Dans ce générateur, on peut utiliser comme électrode négative à base de lithium, les électrodes généralement utilisées, par exemple des électrodes en lithium ou en alliage de lithium.

Les électrolytes utilisés dans ce générateur peuvent être des électrolytes liquides, des électrolytes solides ou encore des polymères conducteurs par ions lithium.

Lorsqu'on utilise un électrolyte liquide, celui-ci est constitué par un sel de lithium en solution dans un solvant approprié généralement organique et aprotique, qui peut être choisi dans le groupe des esters et des éthers cycliques et à chaîne droite ainsi que leurs mélanges.

A titre d'exemples de solvants utilisables, on peut citer le carbonate de propylène, le tétrahydrofurane, le dioxolane, le 1,2 diméthoxyéthane et les autres glymes.

Le sel de lithium constituant l'électrolyte peut être choisi parmi le perchlorate de lithium, le tétrafluoborate de lithium, le trifluorométhane sulfonate de lithium, l'hexafluorophosphate de lithium, l'hexafluoroarséniate de lithium et leurs mélanges.

Lorsqu'on utilise un électrolyte solide, celui-ci peut être constitué par un verre au lithium obtenu par exemple à partir de $P_2S_5$, $Li_2S$ et LiI ou de $B_2S_3$, $Li_2S$ et LiI.

Dans le cas où l'électrolyte est constitué par un polymère, il peut s'agir d'un oxyde de polyéthylène chargé d'un sel de lithium tel que ceux décrits précédemment.

L'électrode positive du générateur de l'invention comporte le matériau d'électrode conforme à l'invention. Généralement pour préparer cette électrode, on part d'une poudre de $M_zV_{2-z}O_{5-t}$ à laquelle on ajoute un matériau conducteur électronique tel que du noir de carbone, de la poudre ou des fibres de graphite et/ou de carbone. Ce mélange, comprimé, est ensuite transformé électrochimiquement en électrode de l'invention. on peut aussi partir d'une poudre de $M_zV_{2-z}O_{5-t}$ déposée sur une grille en matériau conducteur électronique, par exemple une grille de Ni.

Dans ce cas, on dispose l'électrode ainsi préparée dans un générateur électrochimique et on la soumet au cyclage électrochimique nécessaire pour former le matériau conforme à l'invention.

Dans le cas où l'on prépare le matériau par voie chimique, on prépare l'électrode de la même façon mais en utilisant la poudre de $Li_xM_zV_{2-z}O_{5-t}$ obtenue par voie chimique au lieu de la poudre de $M_zV_{2-z}O_{5-t}$.

Le générateur électrochimique de l'invention peut être réalisé sous la forme de couches minces planes ou enroulées en spirales comportant les deux électrodes et l'électrolyte. Il peut être aussi réalisé à partir d'électrodes massives.

D'autres caractéristiques et avantages de l'invention apparaîtront mieux à la lecture de la description qui suit donnée bien entendu à titre illustratif et non limitatif en référence au dessin annexé sur lequel :

- la figure 1 représente schématiquement en coupe verticale un générateur électrochimique au lithium,

- la figure 2 est un diagramme obtenu lors du cyclage électrochimique et de la fabrication d'une électrode conforme à l'invention, qui représente la tension (en volts) en fonction du nombre d'atomes de lithium intercalés (x),

- les figures 3 et 4 sont des diagrammes de cyclage électrochimique d'électrodes en $V_2O_5$, représentant la tension (en volts) en fonction du nombre d'atomes de lithium intercalés (x),

- la figure 5 est le spectre de diffraction de rayons X d'un matériau conforme à l'invention après la première décharge du générateur, réalisé avec une anticathode de cuivre ($\lambda$=1,54Å) et gradué en $2\theta$,

- la figure 6 est le spectre de diffraction de rayons X du même matériau après recharge du générateur, réalisé avec une anticathode de cuivre ($\lambda$=1,54Å) et gradué en $2\theta$,

- la figure 7 représente à titre comparatif le spectre de diffraction de rayons X de $V_2O_5$, réalisé avec une anticathode de cuivre ($\lambda$=1,54Å) et gradué en $2\theta$,

- la figure 8 est un diagramme obtenu lors du cyclage électrochimique et de la fabrication d'une autre électrode conforme à l'invention qui représente la tension (en volts) en fonction du nombre d'atomes de lithium intercalés (x),

- la figure 9 représente la courbe de cyclage électrochimique d'un générateur au lithium utilisant comme électrode positive le matériau conforme à l'invention obtenu par voie chimique.

**Exemple 1.**

Dans cet exemple, on prépare un matériau d'électrode conforme à l'invention par voie électrochimique.

Dans ce but, on mélange 40mg d'une poudre de $V_2O_5$ avec 10mg de noir d'acétylène, par exemple le produit vendu sous la marque Ketjen Black, en broyant intimement les deux poudres dans un mortier en agate. On utilise ensuite ce mélange comme électrode positive dans le générateur électrochimique représenté sur la figure 1.

Sur cette figure, on voit que ce générateur comprend deux vis métalliques 1 et 3 disposées dans une enveloppe (2) en polytétrafluoroéthylène, entre lesquelles sont disposés successivement une électrode négative (5) constituée par un disque de lithium fraîchement découpé de 14mm de diamètre, un séparateur (7) en fibres de verre, une électrode positive (9) de 12mm de diamètre constituée par le mélange de poudres obtenu précédemment et un électrolyte imprégnant le séparateur (7) en fibres de verre et l'électrode positive (9).

L'électrolyte est constitué par une solution de perchlorate de lithium dans du carbonate de propylène distillé qui contient une mole (106,4g) de perchlorate de lithium par litre et on utilise 0,2ml de cet électrolyte pour imprégner le séparateur (7) et l'électrode positive (9).

L'ensemble des deux électrodes et du séparateur est comprimé par les deux vis métalliques (1) et (3) qui servent également de collecteurs de courant. La tension du générateur décrit ci-dessus est d'environ 3,5V.

Pour transformer l'électrode positive (9) en le matériau de l'invention, on décharge cette électrode par passage d'un courant de 200µA jusqu'à ce que son potentiel atteigne une valeur de 1,9V par rapport au lithium.

Sur la figure 2, on a représenté l'évolution du potentiel (en volts) en fonction du nombre d'atomes de lithium (x) intercalés dans l'électrode positive en $V_2O_5$. Sur cette figure, la courbe 1 correspond à la première décharge et l'on voit que le potentiel décroît par paliers de 3,3V à 1,9V ; lorsqu'on atteint 1,9V on a intercalé environ 3 atomes de lithium et obtenu la transformation irréversible de structure conduisant au matériau de l'invention.

Lorsqu'on recharge ensuite l'électrode, on obtient la courbe 2 et l'on peut recharger jusqu'à un potentiel d'environ 3,4V par exemple. Ensuite, si l'on réalise le cyclage électrochimique de l'électrode entre 3,4V et 1,9V, on obtient les courbes 3 qui ne présentent plus les plateaux caractéristiques obtenus lors de l'intercalation dans $V_2O_5$ initial (courbe 1). Ainsi, on peut cycler l'électrode entre 3,4V et 1,9V en ayant un taux d'intercalation et de désintercalation de lithium élevé à chaque cycle, ce qui conduit à une énergie massique supérieure à celle des batteries au lithium classique.

Sur les figures 3 et 4, on a représenté à titre comparatif les courbes de cyclage électrochimique obtenues lorsqu'on réalise le cyclage d'une électrode en $V_2O_5$ comme dans l'art antérieur.

Sur la figure 3, qui correspond à un cyclage électrochimique réalisé entre 3,6 et 3,1V, le système présente une bonne réversibilité mais un faible domaine d'intercalation du lithium.

Sur la figure 4, qui correspond à un cyclage électrochimique entre 3,4 et 2,1 V, la réversibilité du système est moins bonne et les courbes se déplacent au fur et à mesure des cyclages électrochimiques, mais le taux d'intercalation reste faible à chaque cycle.

Dans le document antérieur : Journal of Power Sources, 20 (1987), p. 157-164, Wiesener et al ont étudié l'influence de la décharge d'une électrode en oxyde de vanadium sur les caractéristiques de la batterie, et ils ont illustré une deuxième décharge effectuée jusqu'à un potentiel situé entre 1 et 2V mais le changement de structure du matériau ne s'est pas produit comme dans l'invention car d'après ce document le matériau n'est plus rechargeable. De même, on n'obtient pas des courbes de recyclage du type de celles de la figure 2.

On suppose que l'utilisation d'un potentiel de décharge situé dans cette gamme n'est pas une condition suffisante pour obtenir la modification de structure irréversible conforme à l'invention car cela doit dépendre également de la texture de l'électrode, de la densité de courant utilisée lors de la décharge et éventuellement de la nature de l'électrolyte.

L'utilisation de trop fortes densités de courant lors de la première décharge peut conduire à une polarisation telle du système que le processus de transformation du matériau n'ait pas lieu pour des raisons cinétiques ou résultant d'une mauvaise mise en oeuvre de l'électrode.

Dans l'invention, on utilise pour réaliser cette transformation des densités de courant plus faibles, par exemple $0,177mA/cm^2$ au lieu de $1mA/cm^2$. La structure particulière du matériau de l'invention peut alors être mise en évidence par spectrométrie de diffraction aux rayons X.

La figure 5 représente le spectre de diffraction des rayons X (anticathode de cuivre $\lambda = 1,54$ Å) de l'électrode (9) après la première décharge de la batterie. Sur cette figure, on voit que le spectre comporte deux raies principales à un écart angulaire $2\theta$ de 64 et 44°, qui correspondent respectivement à des distances interréticulaires de $2,04\pm0,05A$ et $1,43\pm0,5A$.

La figure 6 représente le spectre de diffraction de rayons X de ce matériau après recharge du générateur. On remarque que ce spectre est sensiblement identique au spectre de la figure 5. Ainsi, la structure du matériau est maintenue, on observe également les deux raies larges aux mêmes écarts angulaires.

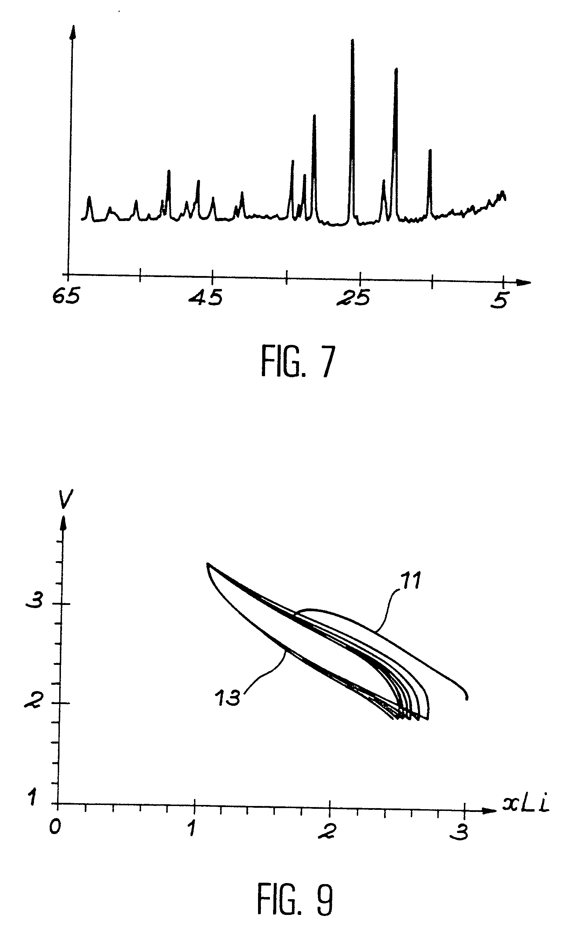

A titre de comparaison, on a représenté sur la figure 7, le spectre de diffraction de rayons X de l'oxyde de vanadium $V_2O_5$. On remarque que celui-ci a une allure totalement différente et ne présente pas les deux raies caractéristiques du matériau de l'invention.

**Exemple 2.**

On suit le même mode opératoire que dans l'exemple 1 pour préparer un matériau d'électrode conforme à l'invention, sauf que l'on utilise comme solvant de l'électrolyte un mélange 50:50 en volume de carbonate de propylène et de 1,2-diméthoxyéthane. On modifie également les limites extrêmes de tension (haute et basse) utilisées pour le cyclage qui sont dans ce cas :

- limite haute 4V

- limite basse 1V

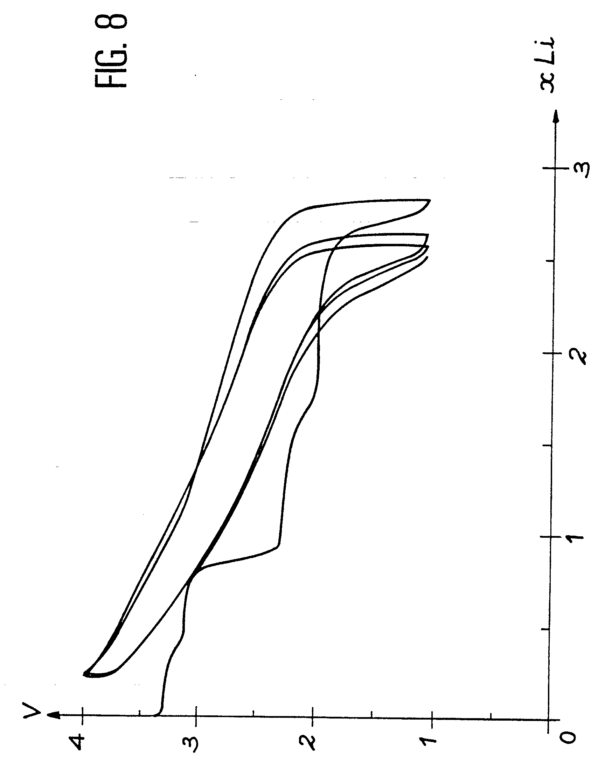

La figure 8 représente la tension (en volts) en fonction du nombre d'atomes de lithium intercalé (x). La forme de la courbe est analogue à celle de la figure 2. L'utilisation d'un aussi large domaine de potentiel conduit à une énergie massique de 900Wh/kg de $V_2O_5$ pour le matériau de l'invention. Si le calcul de l'énergie massique est effectué entre les limites de tension 4V-1,9V (même limite basse que dans l'exemple 1), on obtient 850 Wh/kg de $V_2O_5$.

## Exemple 3.

Dans cet exemple, on prépare le matériau d'électrode de l'invention par voie chimique.

Dans ce cas, on ajoute 500mg de $V_2O_5$ finement broyé à 50ml d'hexane anhydre, puis on maintient la poudre de $V_2O_5$ en suspension dans l'hexane par agitation. On ajoute alors goutte à goutte à la suspension 5,5ml d'une solution à 1,6mol/l de n-butyl lithium dans de l'hexane. On maintient le tout sous agitation pendant 5 jours, puis on laisse la poudre décanter dans ce milieu pendant 10 jours. On récupère la poudre par filtration sur fritté, puis on la rince à l'hexane et on la sèche sous vide.

Le spectre de diffraction de rayons X de la poudre ainsi obtenue a la même allure que celui représenté sur les figures 5 et 6. Le matériau obtenu comprend environ 3 atomes de lithium, il correspond donc à la formule : $Li_3V_2O_5$.

on utilise ensuite ce matériau comme électrode positive dans le générateur électrochimique de la figure 1 et on le soumet à un cyclage électrochimique en le chargeant sous un courant constant de 200μA jusqu'à un potentiel de 3,4V et en le cyclant ensuite avec ce même courant entre 1,9 et 3,4V.

La figure 9 représente les courbes de cyclage obtenues dans ces conditions, soit la tension (en volts) en fonction du nombre d'atomes de Li(x) intercalés.

Sur cette figure, la courbe 11 correspond à la première charge du générateur. Après cette première charge, les courbes de cyclage (13) ont une allure identique à celle des courbes de la figure 2.

Le générateur électrochimique conforme à l'invention utilisant le matériau d'électrode de l'invention présente de nombreux avantages.

L'énergie massique du nouveau matériau est supérieure à celle des matériaux existants. En effet, sa capacité massique mesurée sur les courbes de cyclage est généralement selon les conditions de cyclage de 400 à 900 Wh/kg de $M_zV_{2-z}O_{5-t}$ de L'électrode positive, par exemple de 550Wh/kg de $V_2O_5$ dans l'exemple 1 à partir de la figure 2 et de 916 Wh/kg de $V_2O_5$ dans l'exemple 2 à partir de la figure 8.

La réversibilité du système est très bonne.

La cinétique d'intercalation ou de désintercalation est rapide ; il peut être utilisé dans un très large domaine de potentiels, par exemple entre 4 et 1 volt car l'électrode positive est insensible aux surcharges ou aux surdécharges du générateur.

Il est d'un coût de mise en oeuvre réduit, car le matériau d'électrode peut être obtenu directement à partir du $V_2O_5$ utilisé comme précurseur qui est un produit industriel.

## Revendications

1. Procédé de préparation d'un matériau d'électrode de générateur électrochimique répondant à la formule :

$$Li_xM_zV_{2-z}O_{5-t}$$

dans laquelle M représente Mo et/ou Nb, et x, z et t sont tels que

$$0<x\leq3,2$$
$$0\leq z<1$$
$$0\leq t<0,5,$$

caractérisé en ce qu'il consiste à soumettre un matériau de formule $M_zV_{2-z}O_{5-t}$ dans laquelle z et t sont tels que définis ci-dessus, à une intercalation de lithium par décharge d'une cellule électrochimique comportant une électrode positive constituée par le matériau $M_zV_{2-z}O_{5-t}$, une électrode négative à base de lithium et un électrolyte conducteur par ions lithium, en effectuant cette décharge jusqu'à une tension inférieure à 1,9 volt par rapport à l'électrode de lithium, avec une densité de courant inférieure à 1mA/cm², dans des conditions telles qu'on intercale au moins 2,5 atomes de lithium par mole de $M_zV_{2-z}O_{5-t}$.

2. Procédé selon la revendication 1, caractérisé en ce que la tension minimale de décharge est comprise entre 1 et 1,9 volt par rapport à l'électrode de lithium.

3. Procédé de préparation d'un matériau d'électrode de générateur électrochimique répondant à la formule :

$$Li_xM_zV_{2-z}O_{5-t}$$

dans laquelle M représente Mo et/ou Nb, et x, z et t sont tels que

$$0<x\leq3,2$$
$$0\leq z<1$$
$$0\leq t<0,5,$$

caractérisé en ce que l'on met en contact une poudre d'un matériau de formule $M_zV_{2-z}O_{5-t}$ dans laquelle z et t sont tels que définis ci-dessus, avec un composé organolithien en solution dans un solvant organique, sous agitation et pendant une durée telle que l'on insère dans $M_zV_{2-z}O_{5-t}$ au moins 2,5 atomes de lithium par mole de $M_zV_{2-z}O_{5-t}$.

4. Procédé selon la revendication 3, caractérisé en ce que le composé organolithien est le n-butyl lithium.

5. Matériau d'électrode de générateur électrochimique répondant à la formule :

$$Li_xM_zV_{2-z}O_{5-t}$$

dans laquelle M représente Mo et/ou Nb, et x, z et t sont tels que

$$0<x\leq3,2$$
$$0\leq z<1$$
$$0\leq t<0,5,$$

obtenu par le procédé selon l'une quelconque des revendications 1 à 4, caractérisé en ce qu'il présente un spectre de rayons X tel que celui représenté sur les figures 5 et 6, comprenant deux raies principales à un écart angulaire $2\theta$ de 64 et 44° (pour la longueur d'onde $K\alpha_1$ du cuivre), qui correspondent respectivement à des distances interréticulaires d'environ 2,0 Å et 1,45 Å, dans le cas où z=t=0, ces raies étant pratiquement inchangées après charge et décharge du matériau d'électrode.

6. Matériau selon la revendication 5, caractérisé en ce qu'il présente une courbe de cyclage électrochimique entre 4 et 1V telle que celles des figures 2 et 8.

7. Matériau selon l'une quelconque des revendications 5 et 6, caractérisé en ce que z=0 et x est sensiblement égal à 3.

8. Matériau selon l'une quelconque des revendications 5 à 7, caractérisé en ce que t est égal à 0.

9. Générateur électrochimique rechargeable comportant une électrode positive à base d'oxyde de vanadium, une électrode négative à base de lithium et un électrolyte conducteur par ions lithium, caractérisé en ce que l'oxyde de vanadium de l'électrode positive répond à la formule :

$$Li_xM_zV_{2-z}O_{5-t}$$

dans laquelle M représente Mo et/ou Nb, et x, z et t sont tels que

$$0<x\leq3,2$$
$$0\leq z<1$$
$$0\leq t<0,5,$$

en ce qu'il est obtenu par le procédé selon l'une quelconque des revendications 1 à 4 et en ce qu'il présente un spectre de diffraction de rayons X tel que celui représenté sur les figures 5 et 6, dans le cas particulier de z=t=0, comprenant deux raies à un écart angulaire $2\theta$ de 64 et 44° pour la longueur d'onde $K\alpha_1$ du cuivre, qui correspondent respectivement à des distances interréticulaires d'environ 2,0 Å et 1,45 Å, ces raies étant pratiquement inchangées après charge et décharge de l'électrode.

10. Générateur selon la revendication 9, caractérisé en ce qu'il est recyclable entre 4 et 1V.

11. Générateur selon l'une quelconque des revendications 9 et 10, caractérisé en ce que sa capacité massique recyclable est de 400 à 900Wh par kg de $M_zV_{2-z}O_{5-t}$ de l'électrode positive.

**Patentansprüche**

1. Verfahren zum Herstellen eines Elektrodenmaterials eines elektrochemischen Generators entsprechend der Formel

$$Li_xM_zV_{2-z}O_{5-t}$$

wobei M repräsentativ für Mo und/oder Nb ist und x, z und t so gewählt sind, daß
$$0<x\leq3,2$$
$$0\leq z<1$$
$$0\leq t<0,5,$$

**dadurch gekennzeichnet**, daß es darin besteht, ein Material der Formel $M_zV_{2-z}O_{5-t}$ mit z und t gemäß obiger Definition einer Lithium-Einlagerung durch Entladung einer elektrochemischen Zelle zu unterziehen, welche eine positive Elektrode, gebildet durch das Material $M_zV_{2-z}O_{5-t}$, eine negative Elektrode auf Lithiumbasis und ein Elektrolyt mit Lithium-Ionen-Leitung enthält, indem diese Entladung bis zu einer Spannung von unterhalb 1,9 Volt bezüglich der Lithium-Elektrode bei einer Stromdichte von unterhalb 1mA/cm$^2$ unter solchen Bedingungen vorgenommen wird, daß man mindestens 2,5 Lithium-Atome pro Mol $M_zV_{2-z}O_{5-t}$ einlagert.

2. Verfahren nach Anspruch 1,
**dadurch gekennzeichnet**, daß die minimale Entladungsspannung zwischen 1 und 1,9 Volt bezüglich der Lithiumelektrode liegt.

3. Verfahren zum Herstellen eines Elektrodenmaterials eines elektrochemischen Generators entsprechend der Formel

$$Li_xM_zV_{2-z}O_{5-t}$$

wobei M repräsentativ für Mo und/oder Nb ist und x, z und t so gewählt sind, daß
$$0<x\leq3,2$$
$$0\leq z<1$$
$$0\leq t<0,5,$$

**dadurch gekennzeichnet**, daß man ein Pulver des Materials der Formel $M_zV_{2-z}O_{5-t}$ mit z und t gemäß obiger Definition in Kontakt bringt mit einer in einem organischen Lösungsmittel in Lösung befindlichen Organolithium-Zusammensetzung bei Umrühren und während einer solchen Dauer, daß man in das $M_zV_{2-z}O_{t-t}$ mindestens 2,5 Lithiumatome pro Mol $M_zV_{2-z}O_{5-t}$ einbringt.

4. Verfahren nach Anspruch 3,
   **dadurch gekennzeichnet**, daß die Organolithium-Zusammensetzung n-Butyl-Lithium ist.

5. Elektrodenmaterial für einen elektrochemischen Generator entsprechend der Formel:

   $$Li_xM_zV_{2-z}O_{5-t}$$

   wobei M repräsentativ für Mo und/oder Nb ist und x, z, und t so gewählt sind, daß
   $$0<x\leq3,2$$
   $$0\leq x<1$$
   $$0\leq t<0,5,$$
   erhalten mit Hilfe des Verfahrens nach einem der Ansprüche 1 bis 4,
   **dadurch gekennzeichnet**, daß es ein solches Röntgenstrahlspektrum aufweist, wie es in den Fig. 5 und 6 dargestellt ist, umfassend zwei Hauptspektrallinien mit einer Winkelabweichung von 2 θ zwischen 64 und 44° (für die Wellenlänge $K\alpha_1$ von Kupfer), die Netzabständen von etwa 2,0 Å und 2,45 Å entsprechen im Fall von z=t=0, wobei diese Spektrallinien nach dem Laden und Entladen des Elektrodenmaterials praktisch ausgetauscht sind.

6. Material nach Anspruch 5,
   **dadurch gekennzeichnet,** daß es eine zyklische elektrochemische Kurve zwischen 4 und 1 V aufweist, entsprechend denjenigen in Fig. 2 und 8.

7. Material nach einem der Ansprüche 5 und 6,
   **dadurch gekennzeichnet**, daß z=0 und x etwa gleich 3 ist.

8. Material nach einem der Ansprüche 5 bis 7,
   **dadurch gekennzeichnet**, daß t gleich 0 ist.

9. Aufladbarer elektrochemischer Generator mit einer positiven Elektrode auf Vanadiumoxidbasis, einer negativen Elektrode auf Lithiumbasis und einem Elektrolyt, der lithiumionen-leitfähig ist,
   **dadurch gekennzeichnet**, daß das Vanadiumoxid der positiven Elektrode der Formel entspricht:

   $$Li_xM_zV_{2-z}O_{5-t}$$

   wobei M repräsentativ für Mo und/oder Nb ist und x, z und t so gewählt sind, daß
   $$0<x\leq3,2$$

   $$0\leq z<1$$
   $$0\leq t<0,5,$$
   und daß es nach dem Verfahren nach einem der Ansprüche 1 bis 4 erhalten wurde und es ein Beugungsspektrum für Röntgenstrahlen aufweist, wie es in den Fig. 5 und 6 dargestellt ist, welches im speziellen Fall von z=t=0 zwei Spektrallinien mit einer Winkelabweichung 2 θ zwischen 64 und 44° für die Wellenlänge $K\alpha_1$ von Kupfer aufweist, die den Netzabständen von etwa 2,0 Å bzw. 1,45 Å entsprechen, wobei diese Strahlen nach dem Laden und dem Entladen der Elektrode praktisch ausgetauscht sind.

10. Generator nach Anspruch 9,
    **dadurch gekennzeichnet**, daß er rezyklierbar ist zwischen 4 und 1 V.

11. Generator nach Anspruch 9 oder 10,
    **dadurch gekennzeichnet,** daß seine Massenkapazität von 400 bis 900 Wh pro kg $M_zV_{2-z}O_{5-t}$ der positiven Elektrode rezyklierbar ist.

**Claims**

1. Process for the production of an electrochemical generator electrode material complying with the formula:

   $$Li_xM_zV_{2-z}O_{5-t}$$

   in which M represents Mo and/or Nb, and x, z and t are such that
   $$0<x\leq3.2$$
   $$0\leq z<1$$
   $$0\leq t<0.5$$
   characterized in that it consists of subjecting a material of formula $M_zV_{2-z}O_{5-t}$, in which z and t are as defined hereinbefore, to a lithium intercalation by the discharge of an electrochemical cell having a positive electrode constituted by the material $M_zV_{2-z}O_{5-t}$, a lithium-based negative electrode and a lithium ion-conducting electrolyte, by performing said discharge up to a voltage below 1.9 V with respect to the lithium electrode, with a current density below 1mA/cm$^2$, under conditions such that at least 2.5 lithium atoms are intercalated per mole of $M_zV_{2-}{}^zO_{5-t}$.

2. Process according to claim 1, characterized in that the minimum discharge voltage is between 1 and 1.9 V with respect to the lithium electrode.

3. Process for the production of an electrochemical generator electrode material complying with the formula:

   $$Li_xM_zV_{2-z}O_{5-t}$$

   in which M represents Mo and/or Nb, and x, z and t

are such that

$$0 < x \leq 3.2$$
$$0 \leq z < 1$$
$$0 \leq t < 0.5,$$

characterized in that contacting takes place between a powder of a material of formula $M_z V_{2-z} O_{5-t}$ in which z and t are as defined hereinbefore, with an organolithium compound dissolved in an organic solvent, accompanied by stirring and for a time such that insertion takes place in $M_z V_{2-z} O_{5-t}$ of at least 2.5 lithium atoms per mole of $M_z V_{2-z} O_{5-t}$.

4. Process according to claim 3, characterized in that the organolithium compound is n-butyl lithium.

5. Electrochemical generator electrode material complying with the formula:

$$Li_x M_z V_{2-z} O_{5-t}$$

in which M represents Mo and/or Nb and x, z and t are such that

$$0 < x \leq 3.2$$
$$0 \leq z < 1$$
$$0 \leq t < 0.5$$

obtained by the process according to any one of the claims 1 to 4, characterized in that it has an X-ray spectrum as represented in figs. 5 and 6, comprising two main lines with an angular spacing $2\theta$ of 64 and 44° (for the wavelength $K\alpha_1$ of copper), which respectively correspond to interfaces of approximately 2.0 Å and 1.45 Å, in the case where z=t=0, said lines being substantially unchanged after the charging and discharging of the electrode material.

6. Material according to claim 5, characterized in that it has an electrochemical cycling curve between 4 and 1 V, as shown in figs. 2 and 8.

7. Material according to either of the claims 5 and 6, characterized in that z=0 and x is substantially equal to 3.

8. Material according to any one of the claims 5 to 7, characterized in that t is equal to 0.

9. Rechargeable electrochemical generator having a vanadium oxide-based positive electrode, a lithium-based negative electrode and a lithium ion-conducting electrolyte, characterized in that the vanadium oxide of the positive electrode complies with the formula:

$$Li_x M_z V_{2-z} O_{5-t}$$

in which M represents Mo and/or Nb and x, z and t are such that

$$0 < x \leq 3.2$$
$$0 \leq z < 1$$
$$0 \leq t < 0.5$$

and in that it is obtained by the process according to any one of the claims 1 to 4 and has a X-ray diffraction spectrum like that shown in figs. 5 and 6, in the particular case of z=t=0, comprising two lines with an angular spacing $2\theta$ of 64 and 44° for the wavelength $K\alpha_1$ of copper, which respectively correspond to interfaces of approximately 2.0 Å and 1.45 Å, said lines being substantially unchanged after the charging and discharging of the electrode.

10. Generator according to claim 9, characterized in that it is recyclable between 4 and 1 V.

11. Generator according to either of the claims 9 and 10, characterized in that its recyclable mass capacity is 400 to 900 Wh/kg of $M_z V_{2-z} O_{5-t}$ of the positive electrode.

FIG. 1

FIG. 3

FIG. 4

FIG. 2

EP 0 464 117 B1

FIG. 5

FIG. 6

FIG. 7

FIG. 9

FIG. 8